Europäisches Patentamt

European Patent Office

Office européen des brevets

(19)

(11) Publication number: **0 196 887**
**A2**

# (12) EUROPEAN PATENT APPLICATION

(21) Application number: 86302302.4

(22) Date of filing: 27.03.86

(51) Int. Cl.⁴: **C 05 F 3/06**

(30) Priority: 29.03.85 GB 8508264
25.09.85 GB 8523691

(43) Date of publication of application:
08.10.86 Bulletin 86/41

(84) Designated Contracting States:
DE FR IT NL

(71) Applicant: NATIONAL RESEARCH DEVELOPMENT
CORPORATION
101 Newington Causeway
London SE1 6BU(GB)

(72) Inventor: Price, James Stanley
66 Cause End Road
Wootton Bedford MK43 9DE(GB)

(72) Inventor: Fletcher, Keith Ernest
46 Eastmoor Park
Harpenden Hertfordshire AL5 1BW(GB)

(72) Inventor: Billington, Richard Stephen
3C The Ridgeway
Flitwick Bedford MK45 1DH(GB)

(72) Inventor: Wilkin, Arthur Leonard
Cherrygarth 41 Hawthorn Close
Hitchin Hertfordshire SG5 2BP(GB)

(72) Inventor: Phillips, Victor Roger
1 Church Road Woburn Sands
Milton Keynes Buckinghamshire MK17 8TE(GB)

(74) Representative: Trevor-Briscoe, David William
Patent Department National Research Development
Corporation 101 Newington Causeway
London SE1 6BU(GB)

(54) Vermicomposting system.

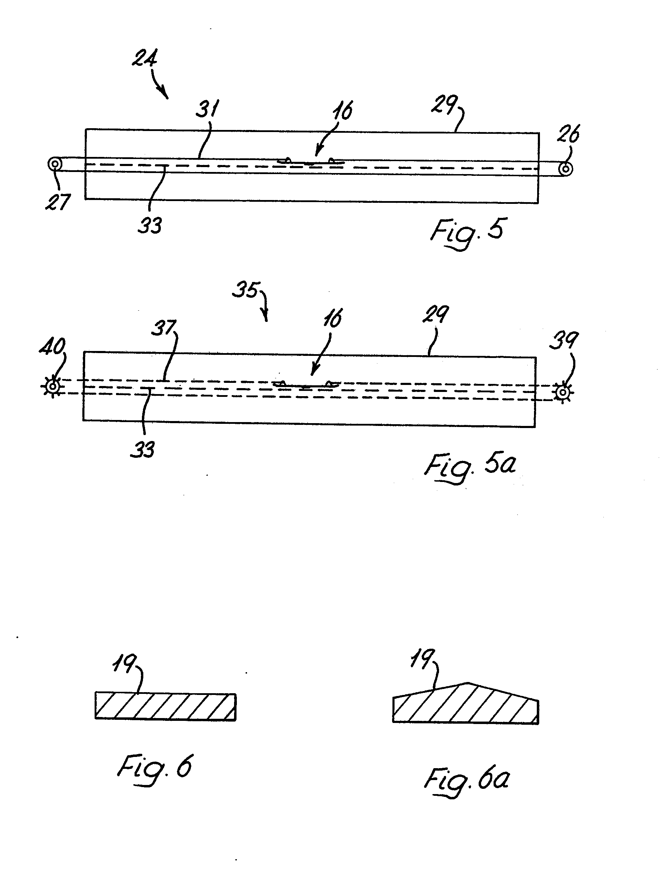

(57) A composting plant e.g. for use in vermiculture, comprises a cruciform-type breaker bar unit 16 (Figure 4) for moving the bottom layer of compost through the perforated floor of the plant. Alternative designs of breaker bar unit are also described.

Fig. 1

EP 0 196 887 A2

— 1 —

128132

## SOLIDS DISCHARGE DEVICE

The present invention relates to a solids discharge device and in particular, but not exclusively, to one for discharging friable and/or particulate material from a container e.g. as part of a vermicomposting system for commercial scale vermiculture.

Whilst the aim of vermicomposting is the improvement of wastes into a useful or marketable product, the production of worms is another result of the process as these have a high protein content and when separated from the processed waste, can be used as a feed additive, e.g. for fish farming, or for pigs or poultry.

To date, two production systems have been in use. The simplest is a batch system where a quantity of waste is inoculated with worms and left until the waste has been broken down. The more successful system, however, is a cumulative-batch layer-fed system. Here a smaller quantity of waste is inoculated with worms and as it becomes broken down another and successive layers are added. In both systems, waste and worms are 'harvested' in one operation when the whole is removed and another batch is then started.

Machines are already known which use one or more augers for discharging compost from a compost bin but such arrangements are expensive for large-area bins and also less than satisfactory in a vermicomposting system, for example, where, ideally, worked material should be extracted from the lowermost layers of the charge with only negligible disturbance of the upper worm-containing layers of material.

On-farm (non-worm) composting is also being considered, and here the possibilities contemplated at present are the use of expensive screw-auger discharge vessels or simple in-pile composting. The latter option tends to give an inconsistent product but the expense involved in the former makes it inappropriate.

In addition, problems are often experienced in obtaining slow, even feed of other difficult solids which display severe bridging, e.g. moist soils in soil processing lines, etc. Commonly used equipment comprises a hopper with vertical or near-vertical sides astride a very heavy duty belt conveyor of the roller bed type, with massive drive and idler drums powered by a very high torque variable speed drive. Flow rate is determined by a combination of belt speed and restriction of the hopper front aperture. Flow of material through the aperture requires massive shearing forces to be generated.

An object of the present invention is to provide a discharge device by which the disadvantages outlined above for existing systems may be avoided or at least significantly reduced.

Another object of the patent invention is to provide a continuous vermicomposting system rather than the batch systems referred to above.

According to the present invention, a discharge device e.g. for a friable and/or particulate material, comprises a container having an apertured floor, one or more material-displacing members engaging with or lying adjacent to the upper surface of the floor, and drive means for moving the one or more members bodily across the floor thereby to urge material in the container downwardly through the apertures in the floor.

Conveniently, the container is square or rectangular when viewed in plan, the one or more material-displacing members comprising an elongate member lying parallel to the length or width dimension of the container, and the drive means is operative to move the elongate member in directions parallel to the other of these two dimensions.

Conveniently, the elongate member spans or substantially spans the container.

Conveniently, the elongate member has a rectangular or domed cross-section.

Conveniently, the elongate member inclines upwardly at each end.

Conveniently, the elongate member includes one or more vertical tines.

Conveniently, the or each tine comprises a flat e.g. triangular, vertical projection having its main plane aligned with the direction of movement of the elongate member through the container.

Conveniently, the or each tine is apertured and the device includes aerating means for supplying air to these apertures.

Conveniently, the aerating means comprises an air-supply tube through which air from a pump is provided to the tines e.g. via an air-supply reel.

Conveniently, the elongate member referred to above comprises a first such member and the one or more material-displacing members includes a second elongate member arranged at right angles to the first member.

Conveniently, the first and second material-displacing members are arranged so as in plan view to provide a simple cruciform structure, preferably unbraced.

Conveniently, the overall length of the second elongate member is not less than about two thirds the overall length of the first elongate member.

Conveniently, the second elongate member inclines upwardly at each end.

Conveniently, the drive means comprises a winch or chain and sprocket system e.g. with the cable or chain, as the case may be, attached to either end of the second elongate member (when present).

Alternatively, the drive means may comprise one or more rams or other linear activators.

The invention also includes a vermicomposting system incorporating a device according to the present invention and in particular, but not exclusively, a continuous vermicomposting apparatus comprising a container for a charge of worm-containing waste material, feed means for adding further amounts of said material to the top of the charge and discharge means according to the present invention for removing from the bottom of the charge quantities of the material processed by the worms in the container.

Conveniently, the floor of the container is apertured and the discharge means operates by forcing worm-processed material through the apertures in the container floor.

Conveniently, in this case, the discharge means comprises an elongate member adapted to traverse the upper surface of the container floor laterally.

Alternatively, the floor of the container may comprise a plurality of longitudinally finned or otherwise shaped elements of non-circular cross-section co-operating to provide a floor to the container and rotatable about their longitudinal axes to encourage material from the container to pass through the container floor.

Conveniently, in this case, the elements are spaced apart to provide the container with an apertured floor and rotation of the elements about their axes encourages material to pass through the apertures in the container floor.

Conveniently, the apparatus includes drive means operative to rotate the elements in a to and fro motion.

Conveniently, the apparatus includes fan means operative to provide a flow of aerating and/or heating air to the undersurface of the charge.

Conveniently, the apparatus includes means for supplying supplementary heating to the middle and/or upper layers of the charge.

Conveniently, the apparatus includes feed means operative to break up lumps in a supply of unprocessed material before loading it onto the upper surface of the charge.

Conveniently, the apparatus includes means for watering the upper layers of the charge.

Conveniently, the apparatus includes enclosure means operative to prevent overwetting of the charge by rain when the apparatus is installed in the open air and to discourage the excessive evaporation of water from the charge in dry conditions.

It is to be noted that the term 'apertured' as used above and in the claims is to be broadly interpreted as describing any non-continuous floor for the container, i.e. any floor not wholly closing off the bottom end of the container.

The invention further includes a bedding system for animals, or a feed hopper, when incorporating a discharge device according to the present invention.

According to another aspect of the present invention, a continuous vermicomposting apparatus comprises a container for a charge of worm-containing waste material, feed means for adding further amounts of said material to the top of the charge and discharge means according to the present invention for removing from the bottom of the charge quantities of the material processed by the worms in the container.

Embodiments of the invention will now be described, by way of example only, with reference to the accompanying schematic drawings in which:-

Figures 1, 2 and 3 are perspective views of different designs of apertured floor for use in a vermicomposting system;

Figure 4 is a perspective view of a cruciform unit for displacing material through the apertured floors of Figures 1 to 3;

Figures 5 and 5a show alternative drives for moving the unit of Figure 4 from end to end of a container;

Figure 6 is a vertical section of one or other of the material-displacing members used in the unit of Figure 4, and Figure 6a shows a similar section of an alternative design;

Figure 7 shows an alternative design of soil-displacing unit to that shown in Figure 4;

Figure 8 shows a modification of the design of Figure 7;

Figure 9 illustrates how the invention may be applied to a bedding system for animals;

Figure 10 shows a schematic vertical section through a first embodiment of the apparatus in accordance with the present invention;

Figure 11 shows a schematic perspective view of a first discharge device for use in the apparatus of Figure 10;

Figure 12 is a vertical section of part of an alternative discharge device to that shown in Figure 11;

Figure 13 is a schematic side view of a feed hopper for use with materials that display severe bridging;

Figures 14 and 15 are respectively side and end views of an underfloor collection scaper for use with the apparatus of the earlier Figures. and

Figure 16 is a schematic perspective view of a drive system for use in some embodiments of the invention.

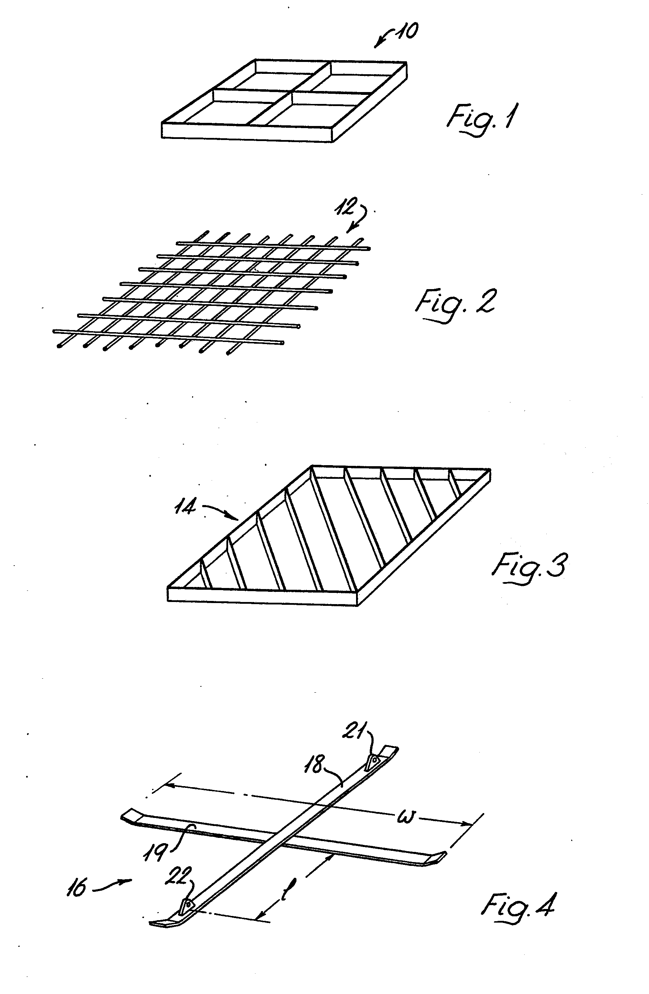

Thus referring first to Figures 1 to 3, these show three alternative designs of apertured floor for the container of a continuous vermicomposting system, namely a grid 10 (Figure 1) a mesh 12 (Figure 2), and a slanting bar construction 14 (Figure 3). In all these designs, the spacing between adjacent floor members (measured perpendicularly to these members) would typically be of a value of from 75 mm up to 200 mm, say.

Figure 4 shows a simple form of breaker bar unit 16 comprising two elongate members 18, 19 arranged in a simple unbraced cruciform construction.

Lugs 21, 22 extending upwardly from member 18 allow the construction to be pulled in a direction parallel to this member across the floor of the container.

The cross-member 19 is dimensioned so as to span or substantially span the container and the length of member 18 is preferably not less than about two thirds of the length of member 19.

In the illustrated embodiment, in fact, the separation $l$ of each lug 21, 22 from the adjacent edge of cross-member 19 was designed to be not more than one third the length $w$ of the member 18.

As illustrated in the drawing, both members 18, 19 incline upwardly at either end e.g. at about $30^{\circ}$ to the horizontal.

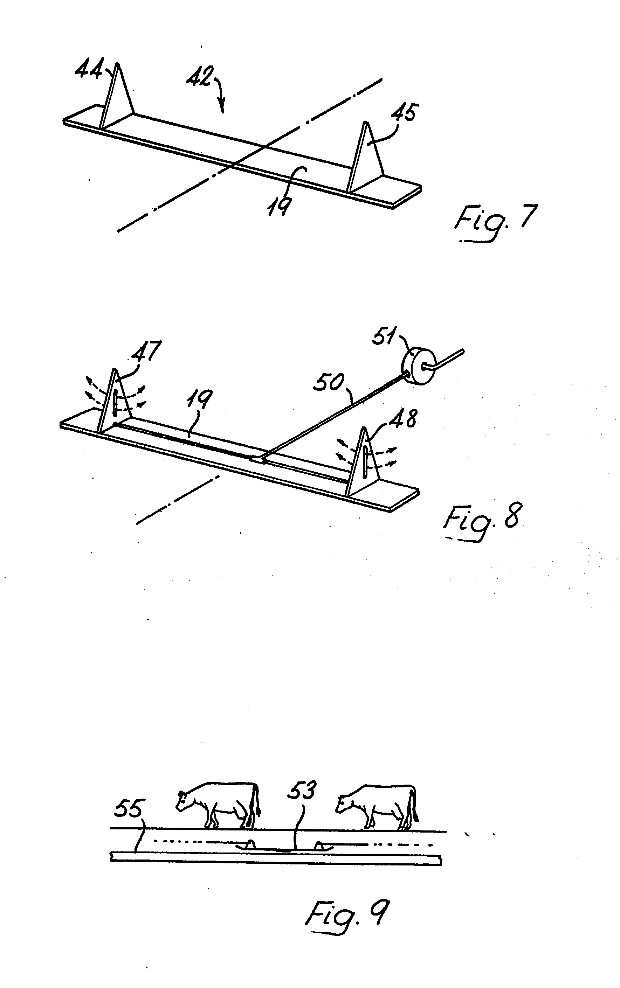

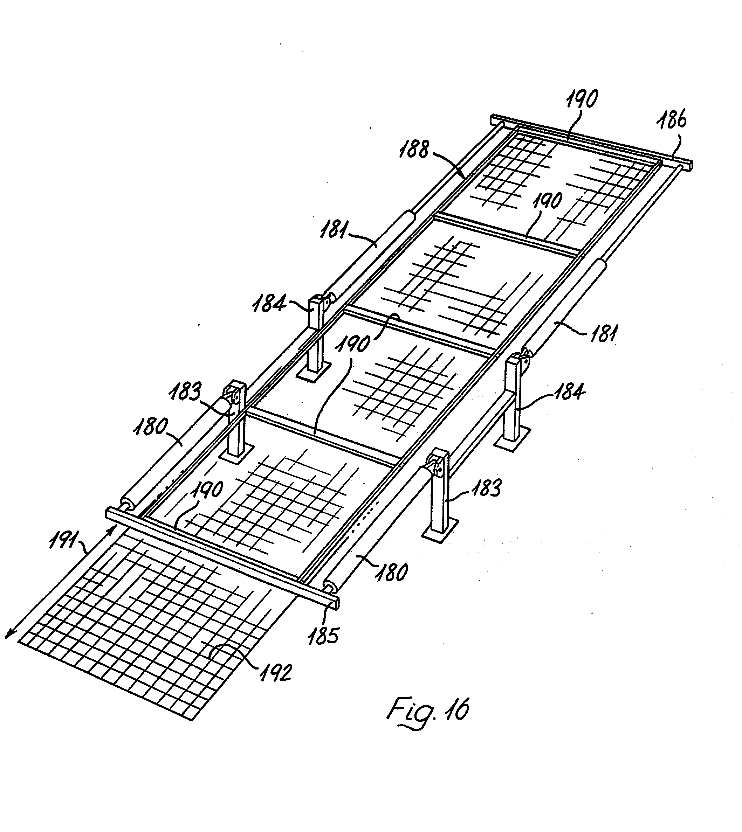

Turning now to Figures 5 and 5a, these show alternative designs of drive system for use in a layer composting system of, say, 50 to 75 square metres (corresponding respectively to containers of 20 metres to 30 metres length, say). In significantly smaller systems e.g. containers of 4 to 9 square metres area, a simple hydraulic ram or similar linear activator may be employed e.g. as shown in the arrangement of Figure 3 to be described hereinafter. A modified ram or linear activator system may be used to drive intermediate size soil-displacement units, such as shown, for example, in Figures 8 to 10 still to be described in detail below. One example of thiks latter type of drive system will be hereinafter described with reference to Figure 16.

Returning now to Figure 5, the drive system 24 comprises, in essence, a winch 26 and idler pulley 27, one at either end of the container 29. A steel cable 31 attached to lug 21 passes around the winch 26 and then underneath the container floor 33 and back around the idler pulley 27 for attachment to the second lug 22. In the drive system 35 of Figure 5a the steel cable 31 is replaced by a chain 37 and the winch 26 and idler pulley 27 are replaced by a sprocket drive 39, 40. In alternative drive systems (not shown), both rotary supports can be driven.

A force of around 3000-4000N per metre width $\underline{w}$ of the cross-member 19 will be required to draw the soil-displacement unit horizontally across the perforated floor of the container and discharge material therethrough without becoming obstructed by any small stones etc. present in the soil.

Waste rests on the perforated floor of the container because of its characteristic tendency to bridge, and the size of the perforations is chosen as the minimum required to ensure the support of the material. On the initial loading, inevitably some material will pass straight through.

In operation, when drawn over the container floor beneath the waste layers in a vermicomposting system, the breaker-bar unit will set up shearing of waste along a line forward of itself. The waste lying below this line is disturbed and its movement results in a localised breakdown of the bridging by which it is supported on the container floor, hence the terminology 'breaker' bar.

Waste above the line of shear remains substantially undisturbed so that worm activity is unaffected. However, there is a 'heaving' effect as the bar passes through and this causes some fissuring of settled waste which is beneficial for maintaining aerobicity of the waste. Vetical leading edges of the bar are essential but the bar may be flat topped (Figure 6) or crowned (Figure 6 a) to give more heaving. Because the bar operates in both directions it must always be of uniform cross-section.

Turning now to the case of a (non-worm) composting reactor, this would have to be deeper than those used in vermicomposting to achieve the higher composting temperatures required and certain modifications to the discharge equipment so far described would be desirable. Figure 7 shows a breaker bar 42 particularly suited for this different environment insofar as vertical triangular tines 44, 45 are now provided to entrain air into the waste. In a variation, hollow tines 47, 48 with internal air feed are used to give localised forced aeration on every breaker pass as shown in Figure 8 where reference numerals 50, 51 respectively indicate a tube and air-supply reel for supplying air to the tines.

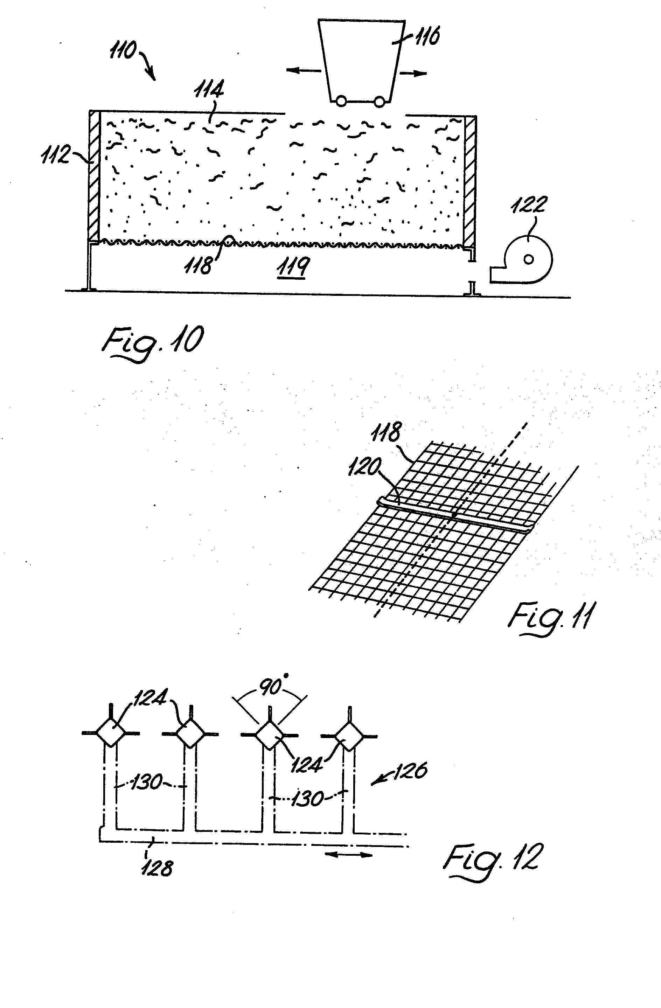

Figure 9 illustrates another possible use for the equipment. Increasing pressure exists to return to the bedding of animals on straw. However accumulating layers of bedding make the use of fixed height feeders and waterers impossible. In the arrangement of Figure 10, however, a breaker bar 53 of massive construction running on a large grid floor 55 e.g. 200 x 200 mm, could break out the lower layers of farmyard manure leaving stock on a pleasant insulating and well drained layer of the manure.

General advantages associated with the illustrated embodiments of the present invention are: low cost, particularly on long containers; true horizontal-layer discharge; the mechanically-broken discharged layer is suited for easy subsequent handling or mixing; some 'heaving' of the waste can take place to provide air entrainment, but without stirring up the worm-active layer in the vermiculture applications; and progressive discharge over the container floor area occurs resulting in low actuating forces. In addition, the grid mesh or slanting-bar design of floor on which the waste is supported has two features which are very important, namely those of allowing air movement into the waste and some draining of any excess water in the waste.

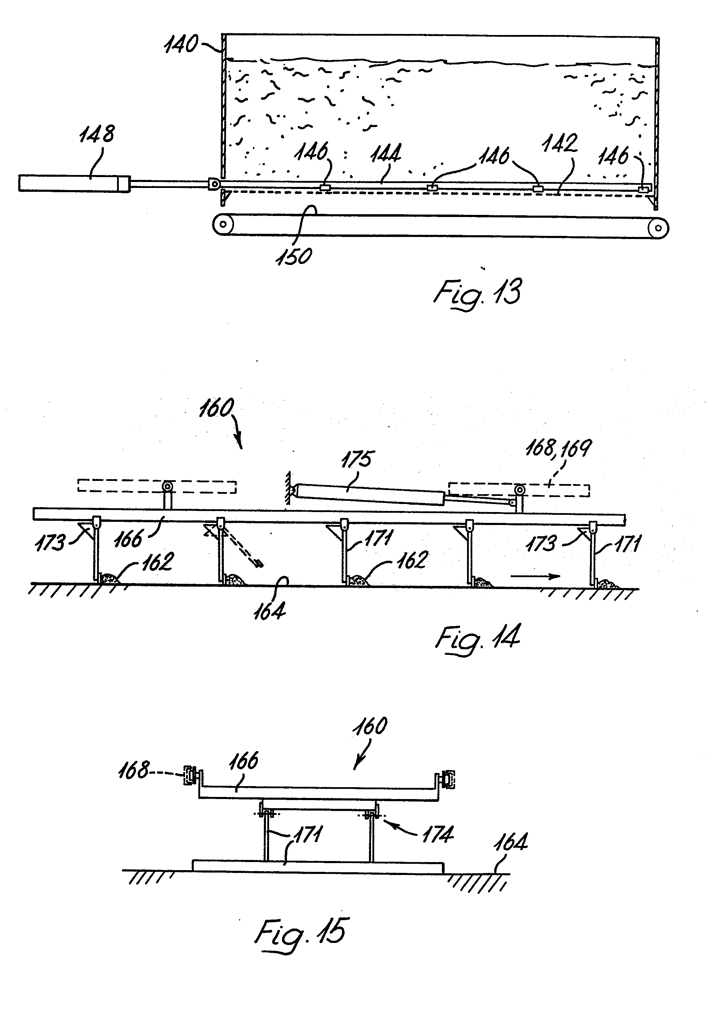

Referring now to Figures 10 and 11 of the drawings, a continuous vermicomposting apparatus 110 according to the present invention comprises a container 112 for a charge of worm-containing organic farmyard waste 114.

The organic waste is loaded or fed to the top of the container in thin layers (typically 20 mm) by a gantry-mounted manure-spreading trolley 116 extending across the full width of the container and able to traverse it from one end to the other. The trolley also serves to break up any lumps initially present in the material. In an alternative arrangement (not shown), the container 112 is loaded from the discharge floor of a reception vessel e.g. in the form of a travelling hopper, positioned over the top of the container.

Reference numeral 118 indicates the floor of the container. This is preferably of an open mesh construction as best seen from Figure 11. Typically, for example, the floor might be provided by a 50 mm square or 75 mm square galvanised steel mesh through which processed waste can be discharged by a chain-drawn breaker bar 20 (shown only in Figure 11).

As will be clear from the drawing, the bar 120 extends across the width dimension of the container floor and, in operation, winch units (not shown) will move it transversely from end to end of the floor, typically at about 1000 cm per minute. With the mesh sizes quoted above and up to about 1.25 metre width, say, the breaker bar might typically be formed from flat steel bar of 50 mm x 6 mm cross-section. For a 2.5 metre width container, the corresponding bar cross-section might typically be 40 mm x 12 mm, say.

As an alternative to a mesh floor, closely spaced parallel bars may be used instead if desired.

Clearly, the container floor 118 must be raised above ground level to provide a collection space 119 for material forced through the mesh by bar 120. At other times, at least the lower layers of material in the container can be aerated, and optionally also dried to some extent, by a fan 122 adapted to provide a blast of cold or hot air beneath the floor 118. This will also be effective in drying out previously discharged matter prior to its removal from beneath the container.

Supplementary heating is also possible if desired, e.g. by electric cables (not shown) mounted at a mid or upper position in the container. Conveniently, these heating cables will be wound around tensioned steel support cables passing from side to side and/or end to end of the container.

Conveniently, the apparatus is completed by thermal insulation and an enclosure (not shown) to prevent overwetting when the container is installed in the open air. The presence of the enclosure will also discourage excessive evaporation of water from the waste in dry weather though a spinkler system (not shown) is also preferably provided as a safeguard to water the upper layers of waste 114 should conditions require. In the event of excess water being provided, this can freely drain through the floor mesh of the container.

In operation of the apparatus, the container 112 is loaded with worm-containing waste as described and the temperature, aerobicity and dampness of the material waste is adjusted if required for optimum conditions.

The high population of worms within the container (typically 3 to 6 Kg of worms per square metre of material) will continually refine the waste, breaking it down to a smaller particle size.

The worms will continually move upward to new layers of waste as the previous layers become exhausted. Discharge of processed waste through the floor of the container takes place at substantially similar intervals to those at which new waste is added to the top, maintaining a fixed amount of continually renewed waste for processing in the container.

Because worms move up to the fresh waste layers, the processed waste will be substantially worm-free and can be discharged through the floor as already discussed for recovery by scraper, conveyor, skip or other suitable means.

In running the apparatus, the aim is always to maintain a high population of worms and achieve maximum throughput of waste.

A typical weekly output of vermicompost when using separated solids waste derived from cattle slurry is about 0.08 cubic meters per square metre of floor space of the apparatus.

In cases where the retention time of waste in the container is only four or five days, the waste throughput is too fast to enable worm cocoons to hatch and grow in the container and they will be lost in the discharged waste. In this case some addition of small worms may be necessary to maintain the desired level of performance.

Conversely, if the waste is passing so slowly through the apparatus as to give a waste retention time of 30 to 40 days, for example, the same worms will need to be harvested from the top layer of the material to prevent a continually expanding worm population.

Where wastes are strongly self-heating due to microbial degradation, careful control of feed layer depth and retained depth should be practised with the aim of keeping temperature at the 20-25$^{o}$C optimum. In particular, overheating to above 30$^{o}$C should be avoided as above this temperature damage to the worms may result.

With the discharge system of Figure 11, movement of the bar 20 across the container floor causes localised breakdown of bridging of contained material and discharge results as the bar advances. However, Figure 12 shows an alternative design of discharge mechanism in which the container floor consists of finned metal square-section elements 124 spanning the base of the container and able to rotate clockwise and anti-clockwise (e.g. through 90$^{o}$) to obtain through-floor discharge of the contents of the container.

Typically, the elements 124 will be steel tubes or rolled hollow sections to which the fins have been welded. The optimum centre spacings of elements 124 will depend on the bridging properties of the material to be discharged but a centre spacing of around 150 mm would be typical. Although if the elements are of square or other non-circular cross-section, the fins may not be necessary for effective discharge to occur, the fins are nevertheless found to result in a more positive discharge and hence their presence is to be preferred. In the illustrated embodiment, the fins might project by about 25 mm, say, from the upper three corners of the square-section elements 124.

Rotation of the sections 124 in a to and fro motion is by an actuator device 126 in which a common linear actuator 130 is linked to the various sections by a series of crank arms. With relatively small containers or in small portions of a large unit, it will often be feasible to operate the linear actuator by hand without mechanical assistance.

As well as its uses in vermicomposting systems, apparatus according to the present invention could also find application in the discharge of materials such as municipal sludge or materials presenting severe bridging or other flow problems.

One such apparatus is shown in Figure 13 and consists of a hopper 140 with vertical sides and a floor 142 constructed of a steel grid or mesh. The optimum dimensions of the hopper are determined by the type of material to be fed.

Above the hopper 140 and in contact with the floor 142 is a framework 144 supporting a number of members 146 which span the width of the hopper.

Members 146 comprise breaker bars of any of the designs illustrated in the previous Figures and they serve to cause localised breakdown of the bridging effect by which the material rests on the floor 142. To achieve this end, the members 146 are caused to reciprocate slowly (say, 100 mm/sec) by, for example, a variable-speed electric screw type linear actuator 148. This causes a controlled and even discharge over the whole hopper floor area and has the beneficial effect of breaking down lumps and structures within the material.

Below the floor 142 is mounted a simple light duty belt conveyor 150 to collect the discharge and transport it to a delivery point. This conveyor is lightly loaded and its speed is not critical as it does not serve as a metering device. Metering is done by the discharge floor 142 and flow rate is adjusted by the rate at which the linear actuator 148 reciprocates the breaker bar members 146.

In an alternative embodiment (not shown), the breaker bars form part of a motor-driven chain loop conveyor but this detracts from the simplicity and serviceability of a simple reciprocating breaker bar framework. In a further alternative, a rotary (e.g. propeller) breaker is driven by a high torque motor in a suitably proportioned cylindrical hopper having a perforated circular discharge floor.

Referring next to Figures 14 and 15, these show an underfloor scaper 160 for collecting waste 162 which has been forced through the apertured floor (not shown) of the container by the scaper bars to accumulate on collecting surface 164.

In essence, the scraper 160 comprises a frame 166 running in U-channel tracks 168, 169 and supporting a number of pivoted scraper blade assemblies 171 which lift on rearward movement of the frame 166 wherever they contact a pile of waste 162 on surface 164. In their forward movement, however, pivoting of the blade assemblies is prevented by contact between the lower surface of the frame 166 and abutment plates 173 mounted on the scapers. The structure of the hinges (174) is such that they will be unaffected by falling waste (see, e.g. Figure 15).

A double-acting hydraulic ram 175 with auto-shuttle valve, acts on one of the cross-members of the frame 166 to drive the frame in a reciprocatory motion under the container floor. During every forward stroke of this motion, the scraper assemblies are held against rotation by the action of plates 173 and act to deliver waste in the direction shown by the arrow in Figure 14. During the reverse stroke, the blades are free to pivot and ride over the accumulated waste as shown in the dotted line position on the left of this Figure.

Referring lastly to Figure 16, this illustrates a breaker drive system comprising two pairs of double-acting rams 180, 181 arranged in opposition between ground anchors 183, 184 and transverse cross-bars 185, 186 of the breaker frame 188 so as to maintain the latter in tension at all times. It will be appreciated that the leading rams are extending with full piston-face forces.

The drive system of Figure 16 is intended principally as an alternative to the winched arrangements of the earlier Figures for containers up to 10 metres length, say, beyond which the power requiremens may become excessive. Typically, the breaker bars 190 are flat steel bars of 2.5 metres width and 40 x 12 mm cross-section. A typical ram stroke 191 and breaker bar centre-to-centre distance would be 2.5 metres and the steel mesh floor 192 of the container would typically have an aperture size of 75 x 75 mm, say.

Advantages of the drive system of Figure 16 are its simple lay-out and the absence of winches and cables in a corrossive waste environment.

106R

## CLAIMS

1. A discharge device comprising a container having an apertured floor, one or more material-displacing members engaging with or lying adjacent to the upper surface of the floor, and drive means for moving the one or more members bodily across the floor thereby to urge material in the container downwardly through the apertures in the floor.

2. A device as claimed in Claim 1 in which the container is square or rectangular when viewed in plan, and the one or more material-displacing members comprises an elongate member lying parallel to the length or width dimension of the container, the drive means being operative to move the elongate member in directions parallel to the other of these two dimensions.

3. A device as claimed in Claim 1 or Claim 2 in which the material-displacing member includes one or more vertical tines, each tine is apertured and the device includes aerating means for supplying air to these apertures.

4. A device as claimed in any preceding claim in which said elongate member comprises a first such member and the one or more material-displacing members includes a second elongate member arranged at right angles to the first member.

5. A device as claimed in any preceding claim in which the drive means comprises a winch or chain and sprocket system or one or more rams or other linear activators.

6. A vermicomposting system incorporating a discharge device according to any preceding claim.

7. A continuous vermicomposting apparatus as claimed in Claim 6 comprising a container for a charge of worm-containing waste material, feed means for adding further amounts of said material to the top of the charge, the discharge device being effective to remove from the bottom of the charge quantities of the material processed by the worms in the container.

8. An apparatus as claimed in Claim 7 in which the floor of the container comprises a plurality of longitudinally finned or otherwise shaped bars of non-circular cross-section co-operating to provide a floor to the container and rotatable about their longitudinal axes to encourage material from the container to pass through the container floor.

9. An apparatus as claimed in any of Claims 6 to 8 including fan means operative to provide a flow of aerating and/or heating air to the undersurface of the charge.

10. An apparatus as claimed in any of Claims 6 to 9 including means for supplying supplementary heating to the middle and/or upper layers of the charge.

Fig. 1

Fig. 2

Fig. 3

Fig. 4

Fig. 5

Fig. 5a

Fig. 6

Fig. 6a

0196887

Fig. 7

Fig. 8

Fig. 9

Fig. 10

Fig. 11

Fig. 12

Fig. 13

Fig. 14

Fig. 15

Fig. 16